# EUROPEAN PATENT APPLICATION

(11) **EP 4 464 156 A1**
(43) Date of publication of application: **20.11.2024**
(21) Application number: 23740163.3
(22) Date of filing: 11.01.2023
(51) Int. Cl.: A01K 61/70, C04B 26/00, C04B 111/40, C04B 111/74, C04B 38/00, C04B 40/02

(54) **CORALLINE CERAMIC MATERIAL, SENSOR AND METHOD FOR OBTAINING SAID MATERIAL**

(30) Priority: 12.01.2022 CO 22000142
(71) Applicant: Universidad De Los Andes, Código Postal 111711 Bogotá D.C. (CO)
(72) Inventor: NEIRA RAMÍREZ, Lorena, Bogotá (CO); SÁNCHEZ MUÑOZ, Juan Armando, Cundinamarca (CO)
(74) Representative: ABG Intellectual Property Law, S.L.
(86) International application number: PCT/IB2023/050266
(87) International publication number: WO 2023/135536

(57) **Abstract**

The present invention discloses a homogeneous microstructured ceramic material that allows replicating the microstructure of the skeleton of a stony coral, as well as its physical, chemical, and biological behavior, useful for promoting the growth of biological material and obtaining a scalable structure for the standardized measurement of seafloor parameters. Furthermore, it discloses a method that allows obtaining the material with the desired properties and a device to be placed in the oceans and wetlands, which comprises said microstructured ceramic material.

## Description

### TECHNICAL FIELD

The present technology belongs in the field of materials engineering with application in marine biology and microbiology, emphasizing on carbon sequestration by promoting the growth and fixation of biological material, and emphasizing on oceanic bioerosion sensing. In particular, the invention provides a material exhibiting physical and chemical characteristics representative of a stony coral, as well as a method for obtaining said material. In an embodiment, the material may be formed into a device that presents an alternative for reducing the impact of greenhouse gases in the atmosphere, which is distributed on the seafloor, allowing the growth of biological consortia of algae and the colonization of bioerosion microorganisms that enhance carbon sequestration. In this way, the generation and maintenance of blue carbon deposits is favored. In another embodiment, the material may be formed into an ocean erosion sensing device that facilitates large-scale measurement of ocean bioerosion, through standardized sampling methods, in a comparable and low-cost manner.

### BACKGROUND OF THE INVENTION

The long-term assurance of the sustainable management of marine ecosystems and ecosystem services, strengthening the economic profitability of ocean activity, has become a primary objective in the current era, mainly due to the need to strengthen the potential for long-term exploitation of the resource. Moreover, there is a need to increase the knowledge about it and to establish a global methodology to analyze the health of the reefs without affecting the integrity of the ecosystem.

The generation and enhancement of economic resources related to ocean activity whose beneficiaries are the government, marine science researchers, marine consultants, and scientific entities, seek to obtain new economic income associated with the sale of carbon credits, increase the profitability of consultancies due to improved effectiveness, reduce operating and design costs, reduce malfunctions associated with fouling, ensure a better economic profitability of ocean activity, and increase knowledge about the oceans.

There are security risks associated with climate change which require making decisions in the face of a possible impact on society and the ecosystem. Thus, it is necessary to reduce the time invested in implementing regulations for the oceans, contribute with new information for global models of ocean acidification, and take measures to protect the CO₂ sequestration potential of the oceans.

In this sense, creating products and methods to measure bioerosion in oceanic sources is vital. It is desirable that these products have scalability, be low cost, and be comparable between sites in order to translate scientific information, which is limited for various sectors such as the public policy sector, the carbon credits market, the Kyoto market, voluntary markets, among others. Therefore, there is a need to implement technologies oriented to ensure the potential for sustainable exploitation of resources, thus consolidating ecosystem services in the long term and ensuring a better economic profitability of ocean activity by increasing knowledge about the oceans.

In particular, within the field of artificial materials for ocean bioerosion measurement, biocompatible materials are required that allow the colonization of bioerosion microorganisms, determining non-destructive parameters of density and porosity measurement, in order to design a ceramic material with physical characteristics similar to those of a coral.

The main challenges for the design of a ceramic material are related to finding a temperature range that enables the formation of porosity and sintering the carbonate matrix, as well as the concentration ratios of materials that ensure that no variations occur in the chemical composition, thus preventing the colonization of the material.

Moreover, considering that there is no consensus in the scientific community to measure bioerosion, in the face of a trend of open and participatory science in climate change at a global level, it is necessary to find a methodology that allows the analysis of reef health and global scalability, without affecting the integrity of the reef. Several approaches to this problem have been developed. For example, in the field of patents, document CN104484710 is known, which reports a method for predicting sea surface erosion caused by wave action on a cliff. This disclosure is mainly oriented to the type of integral wave condition and soil condition, and the methodology of forecasting the amount of pure erosion of the soft sea scarp caused by wave action of the reflection erosion process. Thus, this document deals with some aspects that are determinant for the prediction of erosion, but does not provide materials or sensors that allow measuring it with certainty.

In turn, CN106404647 refers to a method and a device for measuring the resistance to seawater erosion of a cement-based material, which is based on the passage of said material through bodies of fresh and salt water under particular conditions. However, this document does not include obtaining a particular material, nor does it explore the effects that such material might have on the marine environment.

Similarly, CN111461046 discloses a method and device for automatic identification of coastal erosion and sedimentation based on coastal data, automatically extracting areas of erosion and sedimentation, reducing errors in sampling and by human interpretation, improving the speed of detection, so as to quickly and accurately obtain dynamic changes of the coastal intertidal zone information. This document shows a development in technologies associated with the measurement of erosion without detailing information that can be found on the seafloor contributing to the restoration of blue carbon deposits.

Furthermore, CN202886245 refers to a deepwater electrochemical field erosion test device comprising a pressure-tight electronic enclosure, an electrochemical erosion test system located within the pressure-tight electronic enclosure, a plug-in electrode system integrated into one end of the enclosure, and a porous protective cover. However, the document does not mention the materials that make up the device nor does it refer to the advantages that could be obtained with this added value.

On the other hand, approaches to porous coral-like materials with medical applications are known. Fr example, publication WO 00/20353 refers to a method for producing a macroporous ceramic foam, comprising: (a) forming a ceramic slip comprising a substantially homogeneous mixture of a ceramic particulate, an organic binder in a liquid vehicle and optionally one or more surfactants; (b) foaming the ceramic slip; and (c) heating the foamed ceramic slip to a temperature sufficient to substantially burn off the organic binder. Macroporous ceramic foam is suitable for use in biomedical applications such as synthetic bones, tissue engineering scaffolds, or drug delivery devices.

Thus, although there are known devices and/or methods for determining erosion in order to combat the risks associated with climate change, these systems and methods have significant limitations.

Accordingly, a need has been identified to provide technologies to replicate, in a controlled manner, the behavior of corals to identify ocean acidification and promote the generation and accumulation of biological material as blue carbon deposits.

In this sense, a purpose of the present invention is to provide a material having physical, chemical, and biological properties similar to those of a stony coral and, therefore, it presents erosion and accumulation of biological material as a stony coral would. Therefore, as it is formed in a device that can be implanted in the sea floor, it allows generating a platform that contributes to the trapping and fixation of blue carbon. Furthermore, by presenting an erosion similar to that of coral, it provides a standardized platform for measuring ocean acidification.

### DESCRIPTION OF THE DRAWINGS

Other features and advantages of this invention will become more apparent from the following detailed description of a non-limiting, preferred embodiment of the microstructured ceramic material (100) having physical characteristics similar to the microstructure of a stony coral skeleton, the method of obtaining a microstructured ceramic material (200), and the device (300) to be placed in bodies of water, including soils and water column. Reference will be made to the accompanying drawings, wherein:

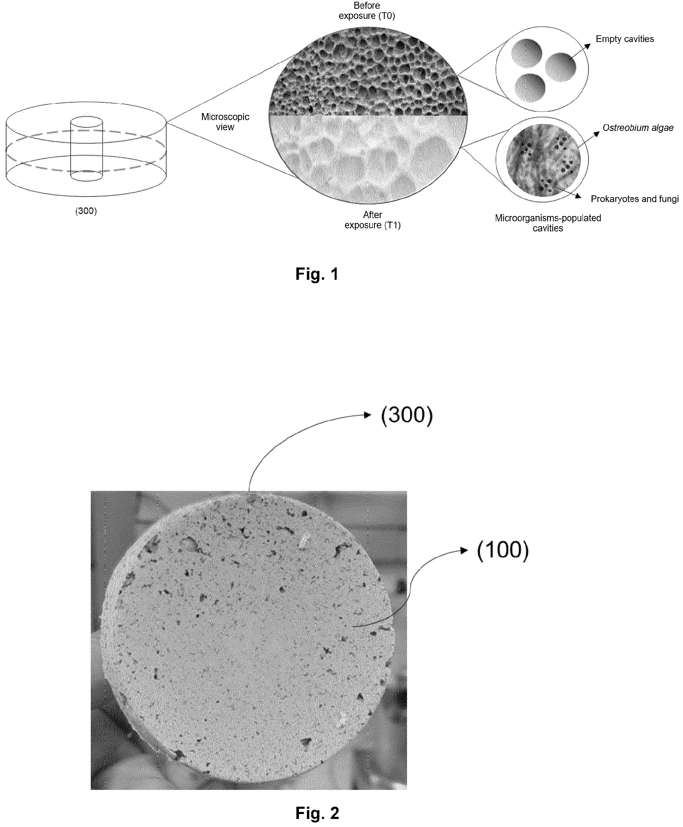

Figure 1 is a side view of the microstructured ceramic material (100) wherein a change in porosity can be seen after being exposed to the aquatic environment. The pore size increases due to the presence and colonization of algae, prokaryotes, and fungi.
Figure 2 is a photograph of the device (300) manufactured with the microstructured ceramic material (100).

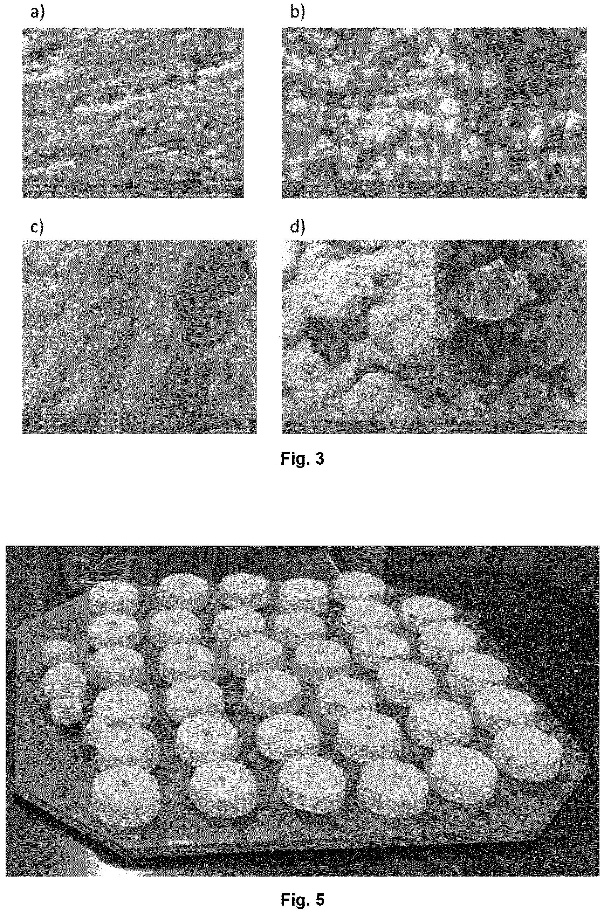

Figure 3 is an image showing the porosity of the material (100) and microstructure identified by scanning electron microscopy (SEM). Reference bar dimension in Figure 3a) 10 µm, in Figure 3b) 20 µm, in Figure 3c) 200 µm, and in Figure 3d) 2000 µm.

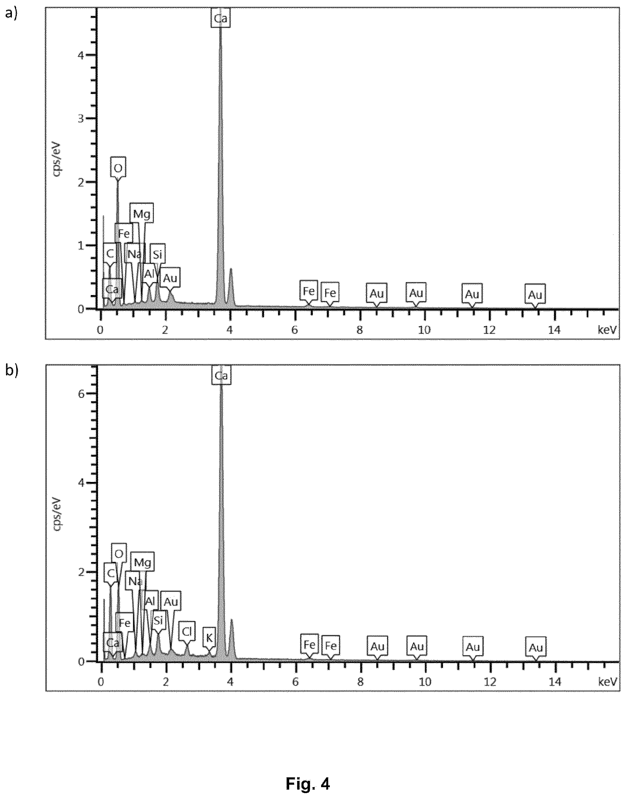

Figure 4 is a view of the microstructure composition by energy dispersive X-ray fluorescence (EDS). Figure 4a) shows an EDS of a specimen derived from artificial coral and Figure 4b) shows an EDS of a specimen derived from polished artificial coral.
Figure 5 is a photograph of multiple devices (300) after the manufacturing process.

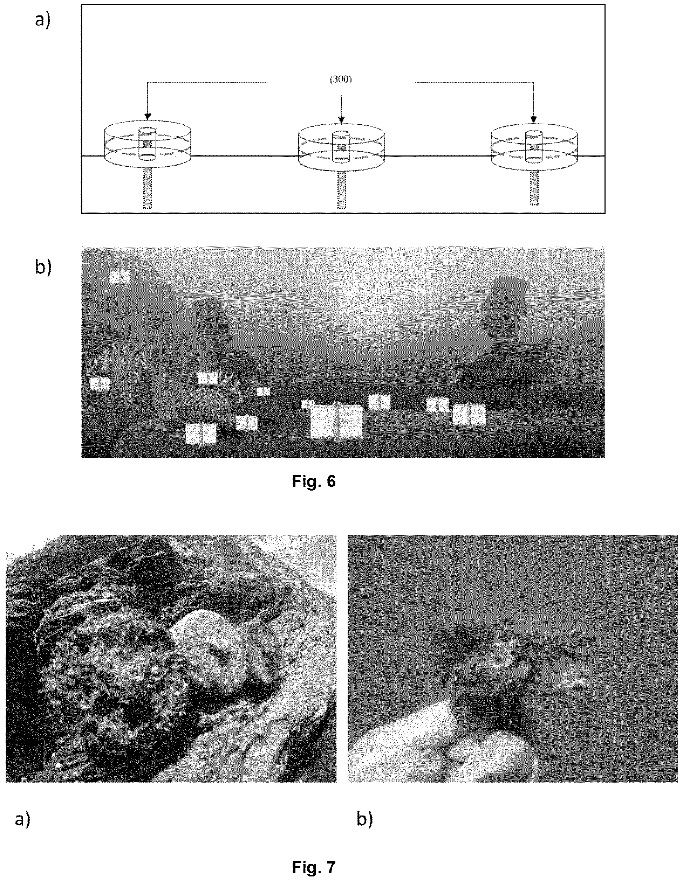

Figure 6 is a graphical representation of a spatial arrangement of a set of devices (300). Figure 6a) shows the arrangement in a flat space on the seafloor and Figure 6b) shows an arrangement along a surface with varying topographies on the seafloor.
Figure 7 shows the device (300). Figure 7a) shows the device attached to a rocky surface and Figure 7b) shows a device collected after exposure to the aquatic environment, where the colonization by different organisms (algae, bacteria, and fungi) can be observed.

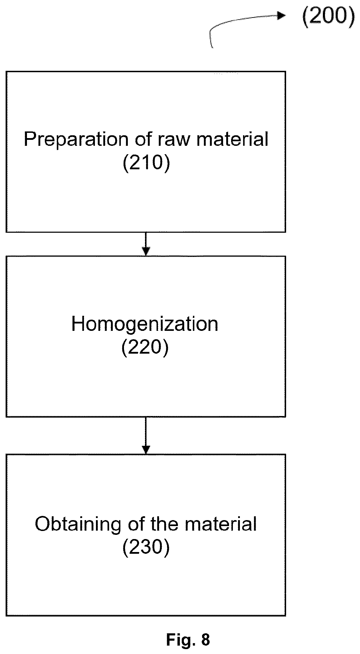

Figure 8 is the general description of the stages comprising the method of obtaining the material by means of the sintering technique, which allows the generation of a material having physical characteristics similar to the microstructure of a stony coral skeleton.

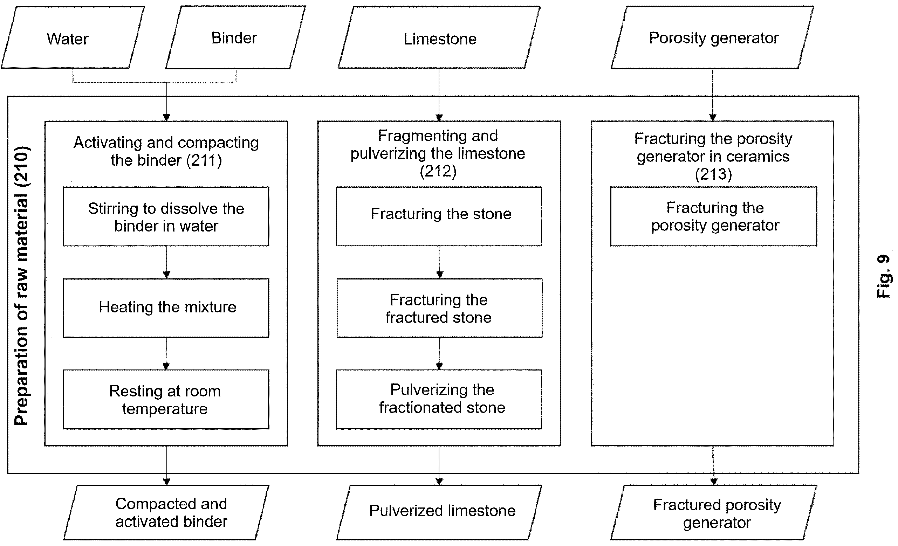

Figure 9 shows the step-by-step of the raw material preparation stage (210).

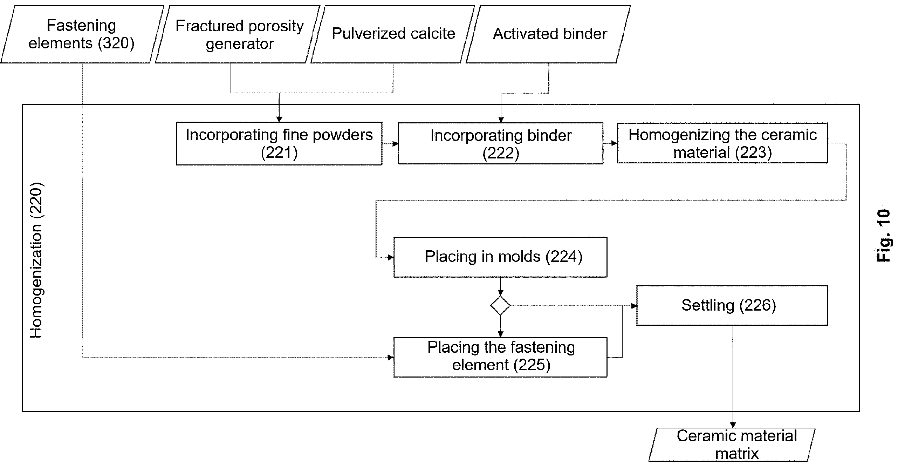

Figure 10 shows the step-by-step of the homogenization stage (220).

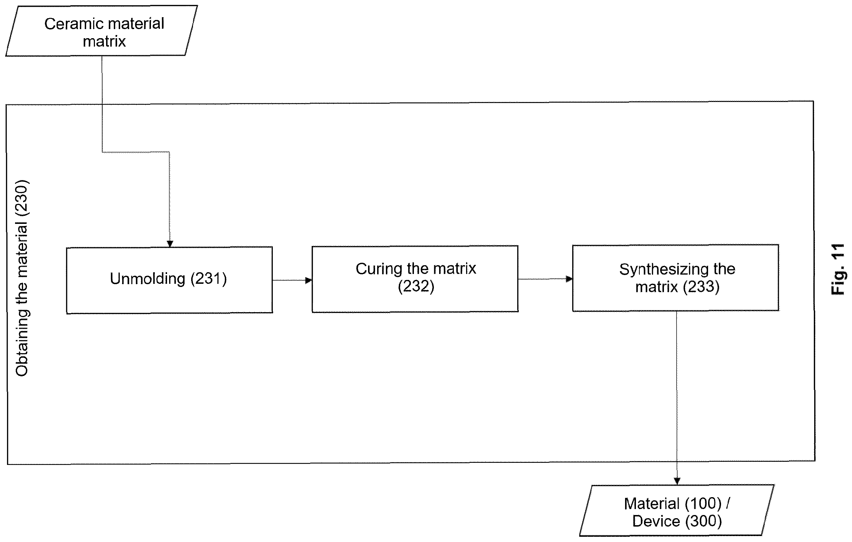

Figure 11 shows the step-by-step of obtaining the material stage (230).

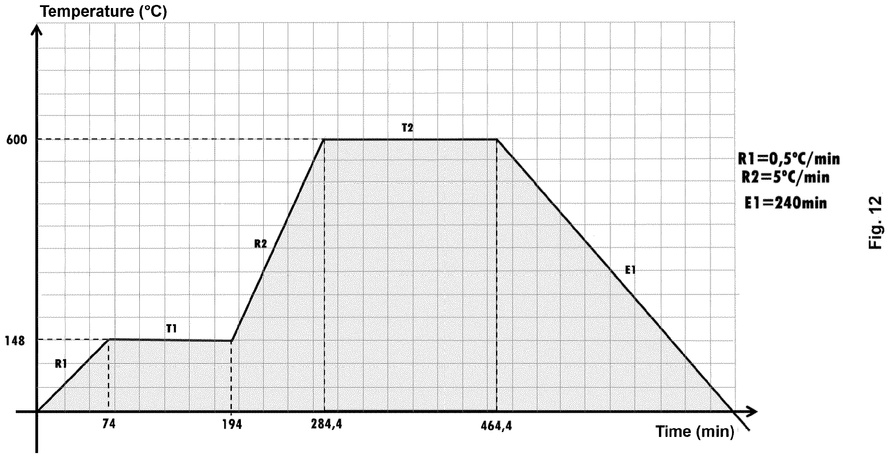

Figure 12 shows the preferred temperature ramp for sintering the microstructured ceramic material (100).

### SUMMARY OF THE INVENTION

The present invention refers to a homogeneous microstructured ceramic material that allows replicating the microstructure of the skeleton of a stony coral, as well as its physical, chemical, and biological behavior, useful for obtaining a scalable structure for standardized measurement of seafloor parameters, wherein said material promotes the growth of biological material in said soil. It further discloses a method (200) for obtaining the material (100) by means of the sintering technique. In addition, it discloses a device (300) comprising, among other elements, said microstructured ceramic (100). Said device (300) can be placed in bodies of water, including soils and water column wetlands.

In turn, the homogeneous microstructured ceramic material (100) is composed of calcite (110) and a binder (120), and exhibits characteristics of compressive strength, bulk density, and connected porosity representative of a stony coral. To obtain this material, it is necessary to find a binder compatible with a microbial environment to ensure the affinity of the material with the bioerosion microorganisms. It is also necessary to find a porosity-generating agent and a sintering protocol that allows the agent to evaporate to produce the desired physicochemical properties.

On the other hand, the method (200) of obtaining a microstructured ceramic (100) requires preparing the raw material, performing homogenization, and obtaining the material. In particular, it is required to find a binder compatible with a microbial environment to ensure the affinity of the material with the bioerosion microorganisms. Similarly, it is necessary to define methodological characteristics and temperature ranges that allow an adequate sintering of the material in order to obtain the physical-chemical properties of a stony coral in the material.

With respect to the device (300), which is made from the microstructured ceramic material (100), it can be formed into regular or irregular geometric shapes. The device (300) can be placed in bodies of water, such as the seafloor.

In an application, the device (300), which experiences erosion in a manner similar to that of a stony coral, can be used for environmental condition sensing applications such as ocean acidification. In an approach, the device (300) can be removed from the seafloor to analyze erosion and bioerosion variables in a laboratory. In other embodiments, the sensor may output *in-situ* data in real time. By taking data from the device (300), the use of corals for ocean bioerosion investigations is reduced, and standardized sampling methods that facilitate large-scale, comparable, and low-cost ocean bioerosion measurements can be implemented. Other benefits of the technology include the generation of indicators of marine diversity and ocean health, and the possibility of consolidating a global monitoring network of bioerosion data at a comparable scale between sites (spatial resolution) with the ability to associate data reading, storage, and processing systems.

In another application, the device (300) promotes the growth of biological material and hosts and/or maintains it in itself for blue carbon fixation. This brings substantial benefits for addressing climate change, as blue carbon ecosystems act at an annual rate two to four times higher than that of mature tropical forests. This benefit is evident at both the ecosystem and financial levels, as carbon markets are showing increasing interest in blue carbon investment.

### DETAILED DESCRIPTION OF THE INVENTION

In a first aspect, the present invention provides a homogeneous microstructured ceramic material (100) having characteristics similar to the microstructure of a stony coral skeleton (100), which, due to its biocompatibility and morphology, allows the growth of biological material, such as the colonization of bioerosion organisms. It should be noted that it is essential for the material that its physical characteristics be similar to the microstructure of a stony coral skeleton, such as compressive strength, dry bulk density, and connected porosity.

Thus, the essential material characteristics of the microstructured ceramic material (100) are a compressive strength between 7 and 10 MPa, preferably 9.7 MPa, a dry bulk density between 1.3 and 1.5 g/cm³, preferably 1.4 g/cm³, a connected porosity between 43% and 51%, preferably 48.3%, and an average pore diameter between 500 and 900 µm, preferably 500 µm.

In one embodiment of the invention, the microstructured ceramic material (100) comprises between 74% and 79% fine powder limestone (110), preferably 74%, and between 21% and 26% binder (120), preferably 26%.

In another preferred mode of the invention, the fine powder limestone (110) is selected from the group consisting of, among others, carbonate rock, sedimentary rock of coral origin, coral rock, yellow limestone, or combinations thereof. In turn, in preferred embodiments of the invention, the binder (120) is a polysaccharide that ensures the compatibility of the material with the microbial environment and, due to its physicochemical characteristics, has the ability to act as gelling, stabilizing, thickening, and film-forming agents, such as, among others, sodium alginate, chitosan, gelatin, gum, instagel, pectin, marine agar, or the like.

It should be noted that, although the microstructured ceramic material (100) according to the present invention may present erosion and accumulation of biological material just as a coral would, it has the following advantages: (i) since the original material is standardized, it is possible to perform accurate studies of changes over time; (ii) natural corals are not deteriorated in practice; (iii) it is transportable for laboratory studies; (iv) it decreases operating and design costs; (v) it can act in the reduction of deterioration associated with fouling; and (vi) ensure a better economic profitability of the oceanic activity.

In an embodiment, the microstructured ceramic material (100) further comprises between 0% and 20% complementary elements (130) selected from micro and/or nanomaterials, including, among others, conductive materials for surface functionalization such as carbon nanotubes, conductivity indicator enzymes, or other variables of interest such as laccase, as well as enriched binders that promote biological growth such as cytokine- and actinomycete-based compounds, spatially bioactive antifungal or antimicrobial materials, and/or organotin compounds for cleaning and antifouling treatment, among others.

In a second aspect of the invention, a method (200) of obtaining a material having physical characteristics similar to the microstructure of a stony coral skeleton is provided. The method of the invention has the following stages: preparation of the raw material (210), homogenization (220) and obtaining (230) of the coral ceramic material (100), which provides the manufacturing conditions required for obtaining a piece with material having physical characteristics similar to the microstructure of a stony coral skeleton. In the event that, in the homogenization stage (220), the device (300) has been molded in the shape of the device (300), the product resulting from the obtaining stage (230) will be the device (300).

To that end, the methodological characteristics that allow consolidating an adequate sintering of the material have been established. Particularly, the temperature ranges that allow the removal of porosity and sintering of the carbonate matrix, fracturing, pulverization, and particle size reduction of the carbonate matrix for homogeneous incorporation to the process, and the concentration ratio [g.ml⁻¹] of the binder for the compaction of the ceramic material were found. Similarly, a matrix was developed that gives rise to a carbon ion environment that allows generating biocompatibility and ensuring that there are no chemical signals that prevent colonization, for example, an inert material or element.

The first stage of the method is the raw material preparation (210). This requires limestone, a binder, and a porosity generator. Possible proportions of limestone, binder, and porosity generator are: between 55% and 90%, preferably between 74% and 76%, and more preferably between 74.1% and 75.2% limestone; between 10% and 30%, preferably between 20% and 25%, and more preferably between 21.1% and 22.2% binder; and between 3% and 6%, preferably between 3.7% and 3.8% porosity generator. Preferably, the raw material comprises 74% fine limestone powder, 22.2% binder, and 3.8% porosity generator.

The fine powder limestone is selected from the group consisting of, among others, carbonate rock, sedimentary rock of coral origin, coral rock, yellow limestone, or combinations thereof. In turn, in preferred embodiments of the invention, the binder is a polysaccharide that ensures the compatibility of the material with the microbial environment and, due to its physicochemical characteristics, has the ability to act as gelling, stabilizing, thickening, and film-forming agents, such as sodium alginate, chitosan, gelatin, gum, instagel, pectin, marine agar, or the like. Furthermore, in preferred embodiments of the invention, the porosity generator is selected from any material that evaporates at the temperatures of the method, such as polyethylene glycol (PEG), fine-grained starch such as cassava starch, and coffee cisco. Preferably, the selected calcite is micrite, the binder is sodium alginate, and the porosity generator is polyethylene glycol (PEG) at a concentration of 6000 g.mol⁻¹.

The preparation of raw material (210) stage comprises the following steps:
a. Activating and compacting the binder (211).
   - The binder is dissolved in water. The dissolution can be made by stirring. Stirring can be done with a frequency between 1 and 10 rpm, preferably 4 rpm, for a time between 10 and 30 min, preferably 20 min.
   - The solution is heated to a temperature between 125 and 137°C, preferably 128°C. Preferably, boiling and introducing bubbles with the stirring element should be avoided.
   - The solution is cooled by resting at room temperature.
b. Fragmenting and pulverizing the limestone (212).
   - The stone is fractured.
   - The stone is fractured using sterile tools such as a mortar or flask.
   - The stone is pulverized using sterile tools such as a high-energy mill until a final diameter between 4 and 25 µm in more than 60% of the sample, and an average diameter between 10 µm and 13 µm, preferably 12.55 µm +- 1.2 µm, is obtained.
c. Fracturing the porosity generator in ceramics (213).
   - The porosity generator is fractured using sterile tools such as a mortar or flask.

The second stage of the method is homogenization (220). The homogenization stage (220) comprises the steps of:
a. Incorporating fine powders (221)
   - The pulverized limestone is mixed with the fractured porosity generator.
b. Incorporating the binder (222)
   - The activated binder is incorporated.
c. Homogenizing the ceramic material (223)
   - The material is homogenized using any mixing device, such as a blender.
d. Placing in molds (224)
   - The molds can have regular or irregular geometric shapes.
e. Settling (226)
   - The resulting material is settled to obtain a structural matrix of ceramic material. Preferably, the settling is carried out in an incubator or in a closed system.

In one embodiment of the invention, the homogenization stage (220) further comprises a step of placing (225) fastening elements (320) after the step of placing in molds (224).

The third stage of the method is obtaining the material (230). The material obtaining stage (230) includes the steps of:
a. Unmolding (231)
   - The ceramic material structure obtained in the homogenization stage (220) is unmolded.
b. Curing the matrix (232)
   - The matrix is cured by heating from room temperature to a temperature between 118 and 148°C, preferably 148°C, with a preferred slope of 0.5°C/min for 2 h and 4 h, preferably 2 h.
c. Synthesizing the matrix (233)
   - The matrix is sintered for 2 h to 6 h, preferably 3 h, using the temperature curve:
      i. Increasing the temperature from between 118 and 148°C, preferably 148°C, to a temperature between 400°C and 900°C, preferably 600°C, with a preferred slope of 5°C/min;
      ii. Maintaining the temperature reached in i. stable for 2 h to 6 h, preferably 3 h;
      iii. Cooling the resulting material in a controlled manner to room temperature to obtain the material (100). The desired cooling time is between 3h and 4h, preferably 4h.

In an embodiment of the invention, in the event that, in the homogenization stage (220), the device (300) has been molded in the shape of the device (300), the product resulting from the obtaining stage (230) will be the device (300).

In a third aspect of the invention, a device (300) is provided. The device is manufactured from the microstructured ceramic material (100). The device (300) has a regular or irregular geometric shape, with a volume between 0.1 m³ and 1 m3.

Preferably, said device is cylinder-shaped with a height between 1 cm and 5 cm, preferably 2 cm, and a diameter between 1 cm and 10 cm, preferably 2.5 cm.

In another preferred embodiment, said device is sphere-shaped with a diameter between 1 cm and 5 cm, preferably 2.5 cm.

In another embodiment, the device (300) further comprises fastening elements (120), selected from metallic elements or parts that fulfill the function of anchoring the device (300) and can be mounted and dismounted in an easy maneuver and without damaging the device (300). The fastening elements (120) can be metallic, plastic, or made of natural fibers or textiles. Preferably, the fastening elements (120) are stainless steel gripping elements such as metal screws and/or metal wires.

In another embodiment, said device (300) further comprises electronic elements (330), selected from elements such as, among others, GPS, sensors, time measuring instruments, processors, communication instruments, and/or data memory, which helps identifying ocean conditions.

In preferred embodiments of the device (300), it is placed in aquatic environments such as the seafloor, and can harbor and promote the growth of species such as corals, coralline algae (Rhodoliths), coral skeleton microbial communities, and microbioerosionators.

In preferred embodiments of the device (300), arrays of multiple devices (300) are placed along the seafloor, either in flat spaces or on surfaces with varying seafloor topographies.

In other preferred embodiments of the device (300), arrays of multiple devices (300) are placed on floating elements of the ocean.

For a better comprehension of the present invention, a porosity generator is understood to be a reagent and/or inorganic or organic compound, or mixtures thereof, which, after incorporation of expanded grinding, fracturing, or setting, generates a connected porous system that is activated upon activation of organic binders.

For a better comprehension of the present invention, fine powder oolitic limestone is understood to be a dense or earthy calcareous powder composed of a large number of carbonate spheres and formed naturally in the littoral zone of waters saturated in calcium carbonates.

For a better comprehension of the present invention, "oolitic limestone target particle size" refers to oolitic limestone powder corresponding to an average particle size of between 12.55-13.16µm and 37.74 µm at the 90th percentile.

For a better comprehension of the present invention, a binder/binding agent is understood to be a stabilizer of the porous system. Organic substance that solidifies and functions as a carbonate matrix bond sealant.

Many modifications and variations may be made to the invention as designated herein without departing from the scope of the accompanying claims.

All details can be replaced by other technically equivalent details and the materials, shapes, and dimensions of the various components can be used according to the requirements of each application needed.

### EXAMPLES

### Example 1: implementation of the manufacturing method

One ton of unprocessed limestone was acquired from the Turbaco mine. This stone was fractured using a sledgehammer to ensure appropriate particle size and to favor subsequent processing conditions. The small fragments (approximately 3-4 kg) were fractured again to be added to a mortar to obtain the initial powder. Subsequently, the initial powder was processed with a high energy mill (*Hi-speed Vibrating Sample Mill CMT model TI-100*) that generated the particle size distribution (approximately 12.5 µm).

At the time of compaction of the homogeneous mixture, 2 l of binder were activated first, wherein the binder comprises molecular grade sodium alginate and type I water. These components were homogenized and heated to 125-137 °C. Then, the porosity generator (polyethylene glycol 6000 / PEG) was processed using a mortar.

The wet mixture comprised of dry powders, binder, and porosity generator was stabilized by standardizing a homogenization and control process in an industrial mixer (1/6 H.P. fixed speed motor) using the radii mentioned in Table 1. The wet mixture was compacted inside a cylindrical plastic equipment (6 cm diameter and 2 cm height) and then left to dry for 24 hours. It was then unmolded to move on to the sintering stage.

**Table 1. Proportion of components for the wet mixture. ** Given that sodium alginate is a viscous material and its dosage is complex, the proportions were adjusted to a range as specified in the table.**

| | Mass (g) | | %w/w | |
|---|---|---|---|---|
| | At 28% alginate proportion** | At 30% alginate proportion** | At 28% alginate proportion** | At 30% alginate proportion** |
| **Cylinder** | 50 | 50 | 0.752 | 0.741 |
| **Sodium alginate** | 14 | 15 | 0.211 | 0.222 |
| **PEG 6000** | 2.5 | 2.5 | 0.038 | 0.037 |
| Total | 66.5 | 67.5 | 1000 | 1.000 |

Finally, in the sintering stage, a muffle (ABAREPHOR 1200°C industrial refractory ceramic furnace) was used under the following parameters: slope 1: 0.5°C.min⁻¹ up to 148°C for 2 hours, slope 2: 5°C.min⁻¹ up to 600°C for 3 hours, decreasing the temperature gradually to room temperature ~21°C for 4 hours). The aim of this process was to achieve the coalescence of the particles by diffusion to the solid state at very high temperatures, but below the melting point of the mixture. It was ensured that the temperature curve included temperatures above the evaporation point of the porosity agent for its total removal from the final product.

A total of 36 devices (300) were obtained from the 2 l mixture and placed in a 35 ppm saline solution for 1-2 days. They were then allowed to dry at room temperature and stored until field use.

### Example 2: Analysis of one or more samples of the material

During the development of the material, 30 devices (300) (1 cm radius and 1 cm height) were analyzed to evaluate density and porosity patterns, pore distribution, and pore family relationships. Two gas pycnometers (UltraPyc 1200e and GeoPyc 1365) were used, and in each run a 4 cm³ sample was analyzed. On the other hand, the volume was determined by calculating the pressure change resulting from the gas displacement caused by each device (300) analyzed and solving the ideal gas law. In addition, the mass was previously calculated on an analytical balance. Porosity was calculated as the pore volume over the apparent volume and expressed as a percentage as shown in Table 2.

**Table 2. Symmetric pore variables recreated from various densities**

| Skeletal ρ | Solid ρ | Apparent ρ | Connected ϕ | Apparent ϕ | Isolated ϕ |
|---|---|---|---|---|---|
| 2.8895 | 2.7804 | 1.4512 | 48.3750 | 47.8012 | -0.5738 |

| | | | | | |
|---|---|---|---|---|---|
| Density (ρ) and Porosity (ϕ) | | | | | |

These analyses showed that 62% of the devices (300) analyzed had a porosity comparable to a natural stony coral.

### Example 3: Comparison with other technologies

The product and method developed in the present invention relate to some of the technologies available on the market. However, the structural features and functionalities of these technologies differ from those of the present invention. For example, the Autonomous Reef Monitoring Structures (ARMS) technology focuses on solving the problem of standardization of biodiversity measurement of benthic communities; however, in comparison with the proposed technology, it does not show the development of any material and only refers to the configuration of a system of cavities made with cement. Similarly, Bioerosion Monitoring Units (BMUs) focuses on solving the problem of standardization of bioerosion measurement, but does not involve material innovation. It uses bleached coral skeleton, while the present invention develops a material that emulates the conditions of a natural stony coral without affecting the corals already established in the marine environment. On the other hand, Reefy aims to design nature-based solutions for reef restoration. Thus, its method is related to the present invention because it consists of printing lego-like modules from polymeric materials. However, it does not relate to stony coral mimicry and does not contemplate what occurs within a natural calcareous infrastructure.

## Claims

1. A homogeneous microstructured ceramic material (100) having physical characteristics similar to the microstructure of a stony coral skeleton, comprising:
- 76% - 79% fine powder limestone (110);
- 21% - 24% binder (120);
wherein said ceramic material has a compressive strength between 7 and 10 MPa, a dry bulk density between 1.3 and 1.5 g/cm3, a connected porosity between 43% and 51%, and an average pore diameter between 500 and 900 µm,

2. The homogeneous microstructured ceramic material (100) according to claim 1, wherein it comprises 74% fine powder limestone (110), 26% binder (120).

3. The homogeneous microstructured ceramic material (100) according to claim 1, wherein the compressive strength is 9.7 MPa, the dry bulk density is 1.4 g.cm⁻³, the connected porosity is 45.3%, and the average pore diameter is 500 µm.

4. The homogeneous microstructured ceramic material (100) according to claim 1, wherein the fine powder limestone (110) is selected from carbonate rock, coral rock, sedimentary rock of coral origin, or yellow limestone.

5. The homogeneous microstructured ceramic material (100) according to claim 1, wherein the binder (120) is a polysaccharide that, due to its physicochemical characteristics, has the ability to act as gelling, stabilizing, thickening, and film-forming agents such as sodium alginate, chitosan, gelatin, gum, instagel, pectin, or marine agar.

6. The homogeneous microstructured ceramic material (100) according to claims 1-4, further comprising 0% - 20% complementary elements (130).

7. The homogeneous microstructured ceramic material (100) according to claim 6, wherein the complementary elements (130) are selected from micro and nanomaterials.

8. The homogeneous microstructured ceramic material (100) according to claim 7, wherein the micro and/or nanomaterials are selected from conductive materials for surface functionalization such as carbon nanotubes, conductivity indicator enzymes, or other variables of interest such as laccase, as well as enriched binders that promote biological growth such as cytokine- and actinomycete-based compounds, spatially bioactive antifungal or antimicrobial materials, and/or organotin compounds for cleaning and antifouling treatment.

9. A method (200) of obtaining a microstructured ceramic material (100), said method comprising:
a. Preparation of raw material (210), with the following steps:
a. Activating and compacting a binder (211);
b. Fragmenting and pulverizing a limestone (212) to a final diameter between 4 and 15 µm in more than 60% of the sample and an average diameter between 10 µm and 13 µm; and
c. Fracturing a binder;
Wherein said raw material comprises between 74% and 76% limestone, between 21.1% and 22.2% binder, and between 3.7% and 3.8% porosity generator.
b. Homogenization (220), wherein a ceramic material matrix is obtained; and
c. Obtaining (230) of the material, with the following steps:
a. Curing the matrix (232); and
b. Synthesizing the matrix (233), wherein the matrix is sintered for 2 h to 6 h using the temperature curve:
i. Increasing the temperature from 118 to 148°C with a slope of 0.5°C.min⁻¹, up to a temperature between 400°C and 900°C;
ii. Maintaining the temperature reached in i. stable for 3 h; and
iii. Cooling the resulting material in a controlled manner to room temperature to obtain the material (100).

10. The method (200) of obtaining a microstructured ceramic material (100) according to claim 9, wherein in the step of sintering the matrix (233), the matrix is sintered for 3 h using the temperature curve:
i. Increasing the temperature from 148°C to 600°C with a slope of 5°C.min⁻¹;
ii. Maintaining the temperature reached in i. stable for 2 h to 6 h; and
iii. Cooling the resulting material in a controlled manner to room temperature to obtain the material (100).

11. The method (200) of obtaining a microstructured ceramic material (100) according to claim 9, wherein the homogenization (220) comprises the steps of:
f. Incorporating fine powders (221), wherein the pulverized limestone is mixed with the fractured porosity generator;
g. Incorporating binder (222), wherein the activated porosity generator is added;
h. Homogenizing the ceramic material (223) by mixing;
i. Placing in molds (224); and
j. Settling (226) to obtain a ceramic material matrix.

12. The method (200) of obtaining a microstructured ceramic material (100) according to claim 11, wherein the homogenization (220) further comprises a step of placing (225) fastening elements (320) after the step of placing in molds (224).

13. The method (200) of obtaining a microstructured ceramic material (100) according to claim 9, wherein the limestone is selected from the group: carbonate rock, sedimentary rock of coral origin, coral rock, yellow limestone and combinations thereof.

14. The method (200) of obtaining a microstructured ceramic material (100) according to claim 9, wherein the binder is selected from the group: sodium alginate, chitosan, gelatin, gum, instagel, pectin, and marine agar.

15. The method (200) of obtaining a microstructured ceramic material (100) according to claim 9, wherein the porosity generator is selected from the group: polyethylene glycol (PEG), fine-grained starch such as cassava starch, and coffee cisco.

16. A device (300) to be placed on the surfaces of oceans and wetlands or in their water column, **characterized in that** it comprises the material (100) according to claim 1, wherein said device has regular or irregular geometric shape, with a volume between 0.1 m³ and 1 m³.

17. The device (300) according to claim 16, wherein said device is in the form of a cylinder with a height between 1 cm and 5 cm and diameter between 1 cm and 5 cm.

18. The device (300) according to claim 16, wherein said device is in the form of a sphere with a diameter between 1 cm and 5 cm.

19. The device (300) according to claims 16 to 18, wherein said device further comprises fastening elements (120), selected from elements or parts that fulfill the function of anchoring the device and can be mounted and dismounted in an easy maneuver and without damaging the device.

20. The device (300) according to claims 16 to 18, wherein said device further comprises electronic elements (330), selected from elements such as GPS, sensors, time measuring instruments, processors, communication instruments, and/or data memory.

21. The device (300) according to claims 16 to 18, wherein said device allows identifying oceanic conditions.

22. The device (300) according to claims 14 to 18, wherein said device hosts the growth of species, such as corals, coralline algae (Rhodoliths), coral skeleton microbial communities, and microbioerosionators.
